# EUROPÄISCHE PATENTSCHRIFT

(11) **EP 0 799 142 B1**
(45) Veröffentlichungstag und Bekanntmachung des Hinweises auf die Patenterteilung: **22.09.1999**
(21) Anmeldenummer: 95935942.3
(22) Anmeldetag: 17.10.1995
(51) Int. Cl.: B60S 1/04

(54) **SCHEIBENWISCHERANLAGE MIT EINEM GERÄUSCH- BZW. SCHWINGUNGSDÄMPFENDEN BEFESTIGUNGSMITTEL**
WINDSHIELD WIPER ASSEMBLY WITH A NOISE- AND VIBRATION-DAMPING FASTENER
SYSTEME D'ESSUIE-GLACES POURVU D'UN ELEMENT DE FIXATION AMORTISSANT LE BRUIT ET LES VIBRATIONS

(30) Priorität: 23.12.1994 DE 4446315
(43) Veröffentlichungstag der Anmeldung: 08.10.1997
(73) Patentinhaber: ITT Automotive Europe GmbH, 60488 Frankfurt (DE)
(72) Erfinder: SCHAEL, Oliver, D-71706 Markgröningen (DE); ORTALE, Alessandro, D-74243 Langenbrettach (DE)
(74) Vertreter: Dreiss, Fuhlendorf, Steimle & Becker
(86) Internationale Anmeldenummer: EP9504069
(87) Internationale Veröffentlichungsnummer: WO9620101

(56) Entgegenhaltungen:
- DE-A- 2 237 516
- DE-A- 4 036 367

## Beschreibung

Die Erfindung bezieht sich auf eine Scheibenwischeranlage mit einem geräusch- bzw. schwingungsdämpfenden Befestigungsmittel zum Befestigen an einer Fahrzeugkarosserie gemäß dem Oberbegriff des Anspruchs 1.

Aus der DE 40 36 367 A1 ist eine vormontierte Scheibenwischeranlage bekannt, deren Motortrageplatte und Wischlagergehäuse mit Befestigungsmitteln zur geräusch- bzw. schwingungsdämpfenden Befestigung an der Fahrzeugkarosserie ausgestattet sind. Die Wischlagergehäuse haben jeweils einen seitlich angeformten Fortsatz, der einen Befestigungsabschnitt mit einer Durchgangsöffnung aufweist. Am Rand einer Motortrageplatte, die zu der Scheibenwischeranlage gehört, befindet sich ebenfalls ein Befestigungsabschnitt mit einer Durchgangsöffnung. In die Durchgangsöffnungen der genannten Befestigungsabschnitte ist jeweils ein hohlzylindrisches Dämpfungselement aus gummielastischem Material mit einer an seinem Außenumfang verlaufenden Ringnut eingeknöpft. Die Ringnut befindet sich etwa in der Körperlängsmitte des Dämpfungselementes. In die zentrische Durchgangsöffnung des Dämpfungselementes ist jeweils eine Metallbuchse eingesetzt, welche zur Aufnahme eines Befestigungsbolzens bzw. einer Befestigungsschraube bestimmt ist.

Nachteilig an diesen bekannten Befestigungsmitteln ist, daß das Einsetzen der Dämpfungselemente in die Befestigungsabschnitte und der Hülsen in die Dämpfungselemente manuell erfolgen muß und somit einen kostenintensiven und aufwendigen Montageprozeß darstellt.

Aus der DE 39 03 976 A1 ist eine andere vormontierte Scheibenwischeranlage bekannt, die unter anderem ein als Druckgußteil hergestelltes Motortrageteil beinhaltet. An das Motortrageteil ist ein seitliches Befestigungsauge angeformt, welches an einer Seite randoffen ausgebildet ist, so daß ein gummielastisches Dämpfungselement gemäß der unter DE 40 36 367 A1 beschriebenen Art seitlich in die Durchgangsöffnung eingeschoben werden kann. Diese Lösung stellt zwar eine Erleichterung in bezug auf das Einsetzen des Dämpfungselementes in die Durchgangsöffnung des Befestigungsabschnittes dar, jedoch treten auch hier im wesentlichen die bereits genannten Nachteile ein.

Aufgabe der Erfindung ist es daher, eine Scheibenwischeranlage der eingangs genannten Art derart weiterzuentwickeln, daß das geräusch- bzw. schwingungsdämpfende Befestigungsmittel bei Verzicht auf eine manuelle Montage des Dämpfungselementes und der Hülse an dem Befestigungsabschnitt kostengünstig herstellbar ist.

Erfindungsgemäß wird die Aufgabe durch eine Scheibenwischeranlage mit den Merkmalen des Anspruchs 1 gelöst.

Der Grundgedanke der Erfindung besteht darin, das Dämpfungselement, welches vorzugsweise als gummielastischer Körper aus elastomerem Werkstoff hergestellt ist, direkt in der für ihn zutreffenden Position in den Befestigungsabschnitt des entsprechenden Trageteils der Scheibenwischeranlage einzugießen, bzw. einzuspritzen. Mit anderen Worten ausgedrückt, wird das Dämpfungselement sofort im Zusammenhang mit seinem Herstellungsprozeß derart in den Raum zwischen der erforderlichen Buchse und der Durchgangsöffnung des Befestigungsabschnittes eingegossen bzw. eingespritzt. Diese Maßnahme hat den Vorteil, daß eine aufwendige Vormontage durch Einknöpfen eines vorgefertigten Dämpfungselementes in die Durchgangsöffnung des Befestigungsabschnittes sowie das Einbringen der Buchse in die Durchgangsöffnung des Dämpfungselementes entfallen kann.

Dadurch, daß die Buchse gemeinsam mit dem Befestigungsabschnitt bzw. dem entsprechenden Bauteil der Scheibenwischeranlage, welche den Befestigungsabschnitt aufweist, einstückig hergestellt wird, ist ein Kostenvorteil in bezug auf die Fertigung dieses Teiles der Scheibenwischeranlage dadurch erzielbar, daß das Einlegen einer separaten Buchse in ein entsprechendes Formwerkzeug zum Zwecke des Umgießens bzw. Umspritzens mit dem Dämpfungselement entfallen kann. Der oder die Stege, die die Buchse einstückig mit dem Befestigungsabschnitt verbinden, sind im wesentlichen dazu bestimmt, die Buchse in ihrer vorbestimmten Position für das Einspritzen des Dämpfungselementes zu halten. Da andererseits die Übertragung von Körperschall bzw. Schwingungen, die beim Betreiben der Scheibenwischeranlage entstehen, auf die Buchse und damit auf die Fahrzeugkarosserie zu verhindern, müssen diese Stege so ausgebildet sein, daß sie Körperschall bzw. Schwingungen gar nicht oder höchstens in vernachlässigbarer Größe übertragen können. Dementsprechend sind die Stege so dünn ausgebildet und so geformt, daß sie ihre Schwingungsenergie im wesentlichen an das Dämpfungselement abgeben, welches sie umschließt, und nicht auf die Buchse übertragen.

Es ist auch möglich, daß die Stege nur für eine begrenzte Zeit, das heißt temporär, die Buchse mit dem Befestigungsabschnitt der Scheibenwischeranlage verbinden. Anders ausgedrückt bedeutet das, daß die Stege so ausgebildet sind, daß sie nach Erfüllung ihrer Positionierungsaufgabe bewußt zertrennt werden. Gemäß einer vorteilhaften Ausgestaltung sind dafür besonders ausgebildete Sollbruchstellen in den Stegen vorgesehen. Entweder erfolgt der Bruch der Stege nach einer gewissen Betriebsdauer der Scheibenwischeranlage selbsttätig oder der Bruch wird beim Befestigen der Scheibenwischeranlage an der Fahrzeugkarosserie durch entsprechende kurze mechanische Kraftbeaufschlagung herbeigeführt. Da die Teile der Stege nach dem Bruch nicht mehr miteinander verbunden sind, können sie auch keinen Körperschall bzw. Schwingungen von der Scheibenwischeranlage auf die Buchse übertragen.

Von Vorteil ist, daß das betreffende Trageteil der Scheibenwischeranlage, welches den Befestigungsabschnitt aufweist, den Erfordernissen entsprechend entweder als Gußteil und dabei vorteilhafterweise als Druckgußteil aus einem geeigneten Metall bzw. einer geeigneten Metallegierung oder auch als Spritzgußteil aus einem geeigneten Kunststoff herstellbar ist. Das Dämpfungselement ist hierbei in Zweikomponenten-Technologie die Buchse umgebend in den Befestigungsabschnitt der Scheibenwischeranlage einspritzbar.

In den Ansprüchen 2 bis 7 sind mehrere vorteilhafte Ausgestaltungen angegeben, die entweder für sich allein oder in Kombination untereinander darauf gerichtet sind, die Buchse entsprechend genau und sicher in der Durchgangsöffnung des Befestigungsabschnittes der Scheibenwischeranlage zu positionieren und außerdem höchstens eine vernachlässigbar geringe Übertragung von Körperschall bzw. Schwingungen von der Scheibenwischeranlage auf die Buchse und damit auf die Fahrzeugkarosserie zu übertagen. Die Merkmale der Ansprüche 5 und 7 sind dabei auf eine besonders exakte und sichere Positionierung der Buchse innerhalb der Durchgangsöffnung des Befestigungsabschnittes gerichtet. Durch die lamellenartige Ausbildung der Stege sind deren Angriffspunkte an der äußeren Mantelfläche der Buchse günstiger verteilbar. Dadurch, daß die lamellenförmigen Stege den Rand der Durchgangsöffnung an einer oder an beiden Außenflächen des Befestigungsabschnittes übergreifen, wird eine feste Verbindung und eine stabile Lagerorientierung der Lamellen in bezug auf den Befestigungsabschnitt erreicht. Einem eventuellen Verkippen der Buchse innerhalb der Durchgangsöffnung des Befestigungsabschnittes wird damit erfolgreicher entgegengewirkt, als mit Stegen, welche einen nahezu punktförmigen Querschnitt aufweisen.

In einer anderen Ausgestaltung gemäß Anspruch 8, ist eine geschlossene Lamelle, welche insgesamt den Ringspalt zwischen der Buchse und dem Rand der Durchgangsöffnung im Befestigungsabschnitt überbrückt, an die Stelle mehrerer einzelner Stege bzw. Lamellen getreten. Diese Ausführung hat den besonderen Vorteil, daß die Gieß- bzw. Spritzgießwerkzeuge für die Herstellung des entsprechenden Trageteiles der Scheibenwischeranlage weniger kompliziert und damit kostengünstiger als die für die vorher beschriebenen Ausführungen ist. In diesem Fall ist es allerdings erforderlich, das Dämpfungselement von beiden Seiten in den Befestigungsabschnitt einzugießen bzw. einzuspritzen. Das Dämpfungselement besteht also gewissermaßen aus zwei separaten Teilen, die durch die geschlossene Lamelle in dem Ringspalt voneinander getrennt sind. Um bei einer derartigen Ausführung die Übertragung von Körperschall bzw. Schwingungen durch die Lamelle so weit als möglich zu unterbinden, ist gegenüber einer ebenförmigen Gestalt der Lamelle eine wellige oder faltige Ausbildung der Lamelle gemäß Anspruch 9 von Vorteil.

Die Montage einer derartigen Scheibenwischeranlage an der Fahrzeugkarosserie erfolgt in der an sich bekannten Art und Weise. Ein Befestigungsbolzen bzw. eine Befestigungsschraube mit entsprechender Unterlegscheibe wird durch die Buchse gesteckt und mit der Fahrzeugkarosserie verschraubt. Da bei der Herstellung der Fahrzeugkarosserie als auch bei der Herstellung der Scheibenwischeranlage gewisse Abmessungstoleranzen bezüglich der Befestigungspunkte für die Scheibenwischeranlage an der Fahrzeugkarosserie auftreten können, werden in der Praxis teilweise Befestigungsabschnitte mit einer langlochförmigen Durchgangsöffnung zur Aufnahme einer entsprechend ovalen Buchse und eines entsprechend ovalen Dämpfungselementes verwendet, um diese Toleranzen ausgleichen zu können. Die vorliegende Erfindung schließt derartig geformte Befestigungsmittel ein, sie ist also nicht auf eine kreisrunde Durchgangsöffnung im Befestigungsabschnitt der Scheibenwischeranlage und auf ein im Querschnitt kreisringförmiges Dämpfungselement sowie eine im Querschnitt kreisringförmige Buchse beschränkt.

Anhand von Ausführungsbeispielen wird die Erfindung nachfolgend näher beschrieben. In der zugehörigen Zeichnung zeigen:
- Fig. 1: eine vormontierte Scheibenwischerantriebseinrichtung in schematischer, perspektivischer Darstellung mit angedeuteten Karosserieteilen, an denen die Einrichtung befestigbar ist,
- Fig. 2: eine Draufsicht auf einen Befestigungsabschnitt einer Scheibenwischerantriebseinrichtung,
- Fig. 3: einen Schnitt entlang der Linie III-III aus Fig. 2,
- Fig. 4: eine Draufsicht eines anderen Ausführungsbeispieles eines Befestigungsabschnittes,
- Fig. 5: einen Schnitt entlang der Linie V-V in Fig. 4,
- Fig. 6: einen Befestigungsabsschnitt einer Scheibenwischerantriebseinrichtung ohne Dämpfungselement, in perspektivischer Darstellung und
- Fig. 7: ein anderes Beispiel eines Befestigungsabschnittes ohne Dämpfungselement, in perspektivischer Darstellung.

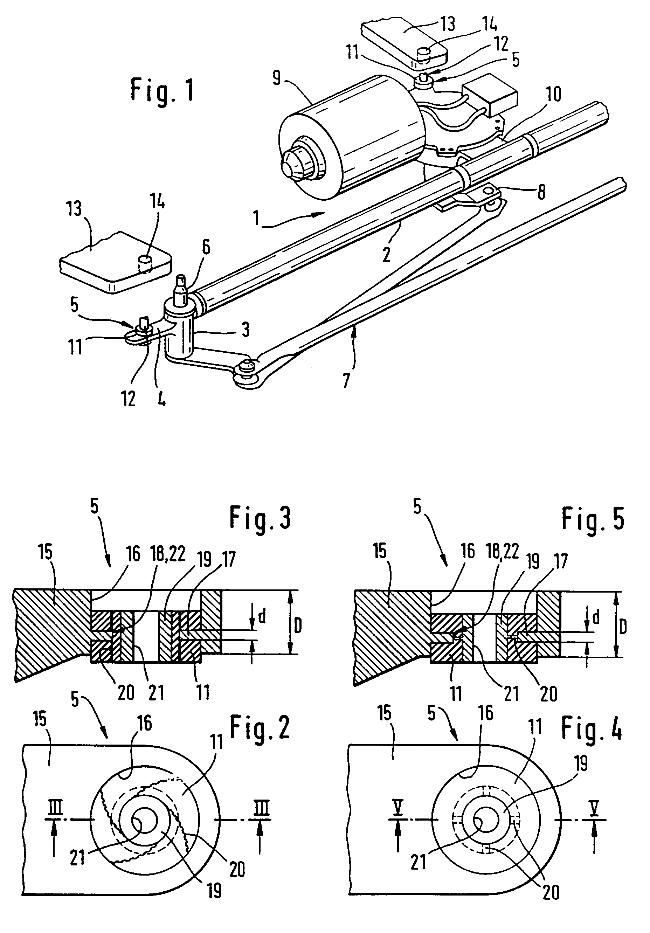

In Fig. 1 ist eine als vormontierte Einheit an der Karosserie eines Kraftfahrzeuges zu befestigende Scheibenwischerantriebseinrichtung in einer Teilansicht schematisch gezeigt. Die zum Antrieb der nicht gezeigten Wischerarme benötigten Antriebskomponenten sind auf einem Tragrahmen 1 montiert, der eine Verbindungsstange 2 besitzt, an deren freien Enden quer hierzu verlaufend buchsenartige Lagerkörper 3 drehfest gehalten sind, von welchen in Fig. 1 nur der linke gezeigt ist. Der Lagerkörper 3 weist an seinem Außenumfang einen angeformten Befestigungsfortsatz 4 auf, dessen Endbereich als Befestigungsabschnitt 5 ausgebildet ist. Im Lagerkörper 3 ist eine Wischerwelle 6 drehbar, jedoch axial festgelegt aufgenommen, an die der nicht dargestellte Wischerarm dreh-fest befestigbar ist. Die beidendig angeordneten Wischerwellen 6 werden über ein mehrteiliges Koppelgestänge 7, welches beide Wischerwellen 6 zur Drehbewegungssynchronisierung verbindet, und über eine Kurbel 8 angetrieben, welche ihrerseits an der nicht dargestellten Abtriebswelle eines Antriebsmotors 9 drehfest montiert ist. Der Antriebsmotor 9 und dessen eventuell vorhandenes Getriebe sind auf einem plattenartigen Ausleger 10 befestigt, der an der Verbindungsstange 2 gehalten ist. In Randnähe des Auslegers 10 ist ein weiterer Befestigungsabschnitt 5 vorgesehen.

Zur schwingungsdämpfenden Befestigung der Scheibenwischerantriebseinrichtung an der Fahrzeugkarosserie weisen die Befestigungsabschnitte 5 der Lagerkörper 3 und der Befestigungsabschnitt 5 des Auslegers 10 eine kreisförmige Durchgangsöffnung auf, in welche ein hohlzylindrisch ausgebildetes elastomeres Schwingungsdämpfungselement 11 angeordnet ist. Die vormontierte Scheibenwischerantriebseinrichtung wird in bekannter Art und Weise an dem dafür vorgesehenen Ort im Motorraum des Kraftfahrzeuges an hierfür bestimmten Karosserieteilen 13 befestigt, von welchen in Fig. 1 nur zwei schematisch dargestellt sind. Die Karosserieteile 13 weisen entsprechende Gewindebohrungen 14 auf, in denen die Befestigungsschrauben 12 festgeschraubt werden können.

In den Fig. 2 und 3 ist ein Beispiel gezeigt, wie ein als geräusch- bzw. schwingungsdämpfendes Befestigungsmittel für die Befestigung einer Scheibenwischeranlage an einer Fahrzeugkarosserie ausgebildet sein kann. Ein Trageteil 15 einer Scheibenwischeranlage, welches durchaus ein Befestigungsfortsatz 4 eines Wischlagers 3 der in Fig. 1 gezeigten Art sein kann, weist an einem freien Ende einen Befestigungsabschnitt 5 von relativ großer Dicke D auf. Dieser Befestigungsabschnitt 5 weist eine kreisförmige Öffnung 16 auf, von deren Innenfläche aus sich eine umlaufende Rippe 17 mit der Dicke d nach innen erstreckt und den umlaufenden Rand einer kreisförmigen Durchgangsöffnung 18 bildet. Eine hohlzylindrische Buchse 19 ist konzentrisch in der Durchgangsöffnung 18 positioniert und mittels 4 Stegen 20 mit dem Befestigungsabschnitt 5 des Trageteiles 15 einstückig verbunden. Die Stege 20 sind lamellenförmig ausgebildet und verlaufen flügelartig, das heißt, bogenförmig, zwischen der Hülse 19 und dem Befestigungsabschnitt 5. Die lamellenartigen Stege sind in bezug auf ihre Breite rechtwinklig zu der Ebene angeordnet, welche durch die Rippe 17 verläuft. Sie treten etwa tangential aus der zylindrischen Außenfläche der Buchse 19 aus und erstrecken sich bis zur Innenseite der Öffnung 16, in die sie wiederum annähernd tangential eintreten. Dabei übergreifen diese Lamellen den Rand der Durchgangsöffnung 18 und sind auf beiden Seiten mit der Rippe 17 verbunden. Durch diese Ausbildung ist eine sichere und exakte Positionierung der Hülse 19 innerhalb der Durchgangsöffnung 18 erreichbar, wobei ebenfalls ein Verkippen der Hülse 19 wirkungsvoll verhindert wird.

Das Dämpfungselement 11 wurde durch Einspritzen von elastomerem Material in den zwischen der zylindrischen Außenfläche der Hülse 19 und der Ausnehmung 16 einschließlich Rippe 17 und Stege 20 gebildeten Raum, der zusätzlich durch eine entsprechende Spritzgießform begrenzt wurde, hergestellt. Es weist somit einen kreisringförmigen Querschnitt auf und schließt in seinem Volumen die Rippe 17 und die Stege 20 ein. Im Zusammenhang mit der Befestigung der Scheibenwischerantriebseinrichtung an der Fahrzeugkarosserie wird von oben her eine Befestigungsschraube unter Zwischenlegen einer entsprechend großen Unterlegscheibe in die Durchgangsöffnung 21 der Hülse 19 eingesteckt und dann mit dem entsprechenden Karosserieteil 13 (Fig. 1) verschraubt.

In den Fig. 4 und 5 ist ein anderes Beispiel eines Befestigungsabschnittes 5 gezeigt, welches in wesentlichen Teilen dem in Fig. 2 und 3 dargestellten Beispiel entspricht. Deshalb wird auf eine Wiederholung der Beschreibung dieser wesentlichen Teile verzichtet. Der wesentliche Unterschied zu dem Beispiel der Fig. 2 und 3 besteht darin, daß nunmehr mehrere, d. h. vier, gleichmäßig über den Umfang der Hülse 19 verteilt angeordnete, speichenartige Stege 20 mit kleinem runden oder auch eckigen Querschnitt die Hülse 19 mit dem inneren Rand der Rippe 17 verbinden. Die Stege 20 sind radial angeordnet und so dünn daß sie zwar die Buchse 19 bis nach dem Eingießen bzw. Einspritzen des Dämpfungselementes 11 in der gewünschten Position halten können aber kaum Schall oder Schwingungen übertragen können. Es kann sogar vorteilhaft sein, die Stege so dünn auszuführen oder mit einer Sollbruchstelle zu versehen, daß sie beispielsweise bei der Montage der Scheibenwischeranlage an der Fahrzeugkarosserie durch die dabei auftretende mechanische Belastung oder durch eine bewußt herbeigeführte mechanische Beanspruchung zertrennt werden oder von der Buchse 19 bzw. der Rippe 17 abreißen.

Es ist auch denkbar, daß als Verbindung zwischen der Hülse 19 und der Rippe 17 des Befestigungsabschnittes 5 ein einziger Steg 20 vorgesehen ist, der im wesentlichen in der Ebene angeordnet, welche durch die Rippe 17 verläuft. In diesem Fall ist der Steg 20 eine einzige geschlossene, dünne Lamelle, welche den Ringspalt zwischen dem Umfang der Hülse 19 und dem Rand der Durchgangsöffnung verschließt. Das Dämpfungselement 11 besteht nunmehr aus einem oberen und einem unteren Teil, welche durch die Rippe 17 und den Steg 20 voneinander getrennt sind. Zwischen den beiden Teilen des Dämpfungselementes besteht keine Materialverbindung. Das Einspritzen der beiden Teile des Dämpfungselementes 11 erfolgt ebenfalls durch Spritzgießen in einer entsprechenden Form, wobei das Einspritzen in zwei durch den Steg 20 voneinander getrennte Formenhohlräume erfolgen muß. Ansonsten ist dieses Verbindungsmittel genauso zu handhaben wie das vorhergehend beschriebene Beispiel. Vorteil für eine effektive Vermeidung bzw. Einschränkung der Übertragung von Körperschall bzw. Schwingungen über diesen Steg 20 ist es, wenn der Steg 20 mit Bezug auf seine radiale Breite wellenförmig oder faltig ausgebildet ist.

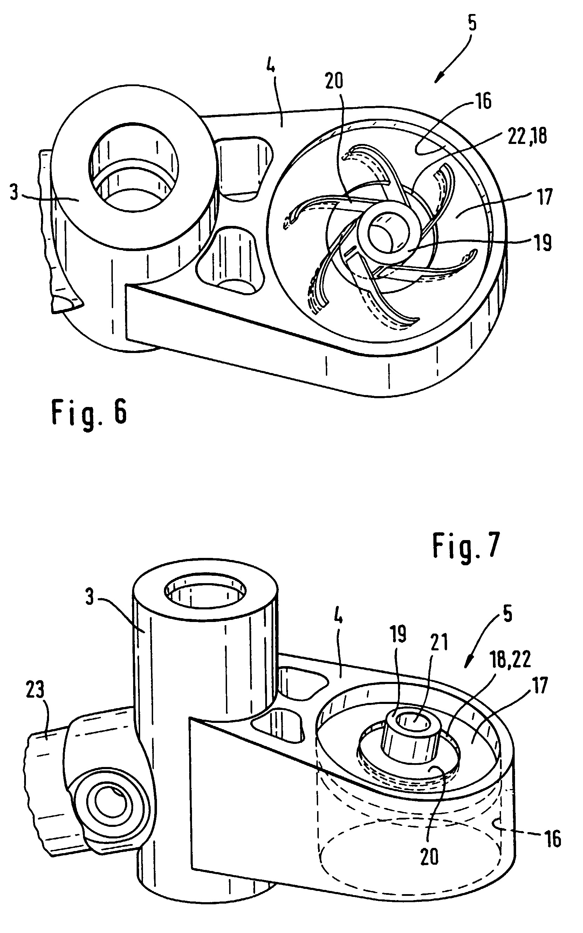

Die in Fig. 6 dargestellte Ausführung eines Befestigungsabschnittes 5 ist dem in den Fig. 2 und 3 dargestellten Beispiel sehr ähnlich. Um den Aufbau des Befestigungsabschnittes besser veranschaulichen zu können, wurde in Fig. 6 eine perspektivische Darstellungsweise gewählt und auf die Darstellung des Dämpfungselementes verzichtet. An der linken Seite der ausschnittweisen Darstellung der Fig. 6 ist gerade noch der Lagerkörper 3 für eine nicht dargestellte Wischerwelle 6 (Fig. 1) erkennbar. An den äußeren Umfang dieses Lagerkörpers 3 ist rechtsseitig der Befestigungsfortsatz 4 angeformt, der den Befestigungsabschnitt 5 aufweist. In der Öffnung 16 ist die kreisringförmige Rippe 17 zu erkennen, deren Rand 22 die kreisförmige Durchgangsöffnung 18 bildet. Innerhalb der Durchgangsöffnung 18 ist konzentrisch die Buchse 19 angeordnet, welche die Durchgangsöffnung 18 durchgreift und mit Bezug auf ihre Längsrichtung annähernd mittig in dieser Durchgangsöffnung 18 angeordnet ist. Gleichmäßig über den Umfang der Hülse verteilt sind sechs Stege 20 flügelartig angeordnet. Die Stege 20 sind lammellenartig ausgebildet und mit Bezug auf ihre Breite rechtwinklig zu der Rippe 17 ausgerichtet. Sie treten außerdem zumindest annähernd tangential aus der äußeren Mantelfläche der Buchse 19 aus und verlaufen bogenförmig in Richtung auf die innere Wand der kreisguerschnittsförmigen Öffnung 16. Dabei übergreifen sie den Rand 22 der Rippe 17 und sind außerdem auf beiden Seiten mit der Rippe 17 verbunden. Die der Hülse 19 abgewandten Seiten der Stege 20 enden in diesem Fall bereits in einem Abstand von der Innenwand der Öffnung 16. Es ist also ersichtlich, daß der gesamte in Fig. 6 dargestellte Körper ein einziges, einstückig hergestelltes Bauteil darstellt. In der bereits beschriebenen Art und Weise (Fig. 2 und 3) muß das in Fig. 6 gezeigte Banteil noch durch ein Dämpfungsselement komplettiert werden, welches mittels Spritzgießen unmittelbar in den Befestigungsabschnitt 5 einzubringen ist.

Fig. 7 zeigt ein anderes Beispiel eines Befestigungsabschnittes, welches mit wesentlichen Merkmalen des in den Fig. 4 und 5 gezeigten Beispieles ausgestattet ist. Auch hier wird auf eine Wiederholung der Beschreibung dieser bereits dargestellten Merkmale verzichtet. Es ist also wiederum ein Lagerkörper 3 für eine nicht dargestellte Wischerwelle ersichtlich, an dessen Umfang linksseitig ein Befestigungszapfen 23, der in dieser Fig. nicht vollständig dargestellt ist, angeformt ist, mit welchem der Lagerkörper 3 drehfest mit der Verbindungsstange 2 (Fig. 1) einer Scheibenwischerantriebseinrichtung verbindbar ist. Rechtsseitig ist an die Außenseite des Lagerkörpers 3 wiederum ein Befestigungsfortsatz 4 angeformt, der einen Befestigungsabschnitt 5 aufweist. In einer Ausnehmung 16 im Bereich des Befestigungsabschnittes 5 ist wiederum eine kreisringförmige Rippe 17 zu erkennen, deren innerer Rand 22 zugleich die kreisförmige Durchgangsöffnung 18 bildet. Die Buchse 19 ist die Durchgangsöffnung 18 durchgreifend konzentrisch in dieser angeordnet. Der zwischen dem Rand 22 der Rippe 17 und dem Umfang der Buchse 19 bestehende kreisringförmige Spalt ist durch eine einzige, geschlossene Lamelle überbrückt, welche als Steg 20 funktioniert. Der dünnwandige Steg 20 ist also so ausgebildet, daß er den genannten Ringspalt vollständig verschließt und die Hülse 19 mit der Rippe 17 verbindet. Dementsprechend ist also das gesamte in Fig. 7 dargestellte Bauteil einstückig hergestellt. Analog zu Fig. 6 ist auch das in Fig. 7 dargestellte Bauteil durch ein Dämpfungselement in seinem Befestigungsabschnitt 5 zu komplettieren. Wie bereits zu den Fig. 4 und 5 beschrieben, müßte in diesem Fall das Dämpfungselement aus zwei voneinander getrennten Teilen bestehen, die jedes für sich separat von oben bzw. von unten in den Befestigungsabschnitt 5 einzuspritzen ist. Bei dem in Fig. 7 gezeigten Beispiel ist vorgesehen, daß die Befestigungsschraube von unten her in die Durchgangsöffnung 21 der Buchse 19 einzustecken ist.

Es ist noch zu bemerken, daß auch ein an einer Befestigungsplatte, wie z. B. dem Ausleger 10 der Scheibenwischerantriebseinrichtung (Fig. 1) vorgesehener Befestigungsabschnitt 5 erfindungsgemäß ausgebildet sein kann. Es ist nicht erforderlich, daß der Befestigungsabschnitt 5 eine Öffnung 16 aufweisen muß, welche das Dämpfungselement 11 an seiner äußeren Mantelfläche begrenzt. Bei Verwendung einer entsprechenden Spritzgießform ist ein Dämpfungselement 11 auch in diesem Fall in den Befestigungsabschnitt 5 einspritzbar. Das Dämpfungselement 11 und die Buchse 19 stehen in diesem Fall an beiden Seiten aus der den Befestigungsabschnitt 5 aufweisenden Trägerplatte hervor.

### Bezugszeichenliste

- 1: Tragrahmen
- 2: Verbindungsstange
- 3: Lagerkörper
- 4: Befestigungsfortsatz
- 5: Befestigungsabschnitt
- 6: Wischerwelle
- 7: Koppelgestänge
- 8: Kurbel
- 9: Antriebsmotor
- 10: Ausleger
- 11: Dämpfungselement
- 12: Befestigungssschraube
- 13: Karosserieteil
- 14: Gewindebohrung
- 15: Trageteil
- 16: Öffnung
- 17: Rippe
- 18: Durchgangsöffnung
- 19: Buchse
- 20: Steg
- 21: Durchgangsöffnung
- 22: Rand
- 23: Befestigungszapfen
- D: Dicke
- d: Dicke

## Patentansprüche

1. Scheibenwischeranlage mit einem geräusch- bzw. schwingungsdämpfenden Befestigungsmittel zum Befestigen an einer Fahrzeugkarosserie, wobei ein Dämpfungselement (11) derartig in einer Ausnehmung (18) eines Befestigungsabschnittes (5) der Scheibenwischeranlage angeordnet ist, daß der Rand (22) der Ausnehmung (18) in eine in der Außenseite des Dämpfungselementes (11) angeordneten Ausnehmung eingreift und auf beiden Seiten des Befestigungsabschnittes (5) Teile des Dämpfungselementes (11) angeordnet sind, und wobei eine Buchse (19) zur Aufnahme eines Befestigungsbolzens bzw. einer Befestigungsschraube (12) in einer zumeist zentrischen Durchgangsöffnung des Dämpfungselementes (11) angeordnet ist, **gekennzeichnet durch** die Kombination folgender Merkmale:
a.) der Befestigungsabschnitt (5) und die Buchse (19) sind als ein einziges Teil einstückig aus dem gleichen Werkstoff hergestellt,
b.) die Buchse (19) ist mittels eines oder mehrerer Stege (20) in einem Abstand von dem Rand (22) der Ausnehmung (18) des Befestigungsabschnittes (5) gehalten und über den oder die Stege (20) mit dem Befestigungsabschnitt (5) zumindest temporär verbunden,
c.) der oder die Stege (20) sind so dünn und so geformt, daß sie Körperschall bzw. Schwingungen nicht oder höchstens in vernachlässigbarem Maße übertragen,
d.) das Dämpfungselement (11) ist in den Raum zwischen Befestigungsabschnitt (5) und Buchse (19) und dem einen Steg (20) bzw. den mehreren Stegen (20) eingegossen bzw. eingespritzt.

2. Scheibenwischeranlage nach Anspruch 1, **dadurch gekennzeichnet**, daß sich mehrere Stege (20) speichenartig oder flügelartig zwischen der Buchse (19) und dem Befestigungsabschnitt (5) erstrecken.

3. Scheibenwischeranlage nach einem der vorhergehenden Ansprüche, **dadurch gekennzeichnet**, daß die Länge der Stege (20) im Bereich zwischen der Buchse (19) und dem Rand (22) der Ausnehmung (18) des Befestigungsabschnittes (5) größer ist als der jeweils zu überbrückende Abstand zwischen der Buchse (19) und dem Rand (22) der Ausnehmung (18).

4. Scheibenwischeranlage nach Anspruch 3, **dadurch gekennzeichnet**, daß die Stege (20) bogenförmig oder S-förmig oder Ω-förmig oder V-förmig oder dergleichen ausgebildet sind.

5. Scheibenwischeranlage nach einem der vorhergenden Ansprüche, **dadurch gekennzeichnet**, daß die Stege (20) lamellenartig ausgebildet sind und hinsichtlich ihrer Breite in einem Winkel von 0° bis 180° zu der durch den Rand (22) der Ausnehmung (18) des Befestigungsabschnittes (5) verlaufenden Ebene angeordnet sind.

6. Scheibenwischeranlage nach einem der vorhergehenden Ansprüche, **dadurch gekennzeichnet**, daß die Stege (20) zumindest annähernd tangential in die äußere Mantelfläche der Buchse (19) einmünden.

7. Scheibenwischeranlage nach einem der vorhergehenden Ansprüche, **dadurch gekennzeichnet**, daß die Stege (20) den Rand (22) der Ausnehmung (18) an einer oder an beiden Außenflächen des Befestigungsabschnittes (5) übergreifen.

8. Scheibenwischeranlage nach Anspruch 1, **dadurch gekennzeichnet**, daß ein einziger Steg (20) in Form einer geschlossenen Lamelle den Ringspalt zwischen Buchse (19) und Rand (22) der Ausnehmung (18) im Befestigungsabschnitt (5) überbrückt und daß auf beiden Seiten des Befestigungsabschnittes (5) jeweils ein Teil des Dämpfungselementes(11) in den Raum zwischen Befestigungsabschnitt (5) und Buchse (19) und dem einen Steg (20) eingegossen bzw. eingespritzt ist.

9. Scheibenwischeranlage nach Anspruch 8, **dadurch gekennzeichnet**, daß die Lamelle in Richtung der Breite des Ringspaltes zwischen Buchse (19) und Rand (22) der - Ausnehmung (18) wellig oder faltig ausgebildet ist.

10. Scheibenwischeranlage nach einem der vorhergehenden Ansprüche, **dadurch gekennzeichnet**, daß die Stege (20) eine Sollbruchstelle aufweisen, an welcher sie bei mechanischer Beanspruchung, z. B. bei der Montage der Scheibenwischeranlage bzw. des Scheibenwischersystems an der Fahrzeugkarosserie, zerbrechen.

11. Scheibenwischeranlage nach einem der vorhergehenden Ansprüche, **dadurch gekennzeichne**t, daß das Bauteil der Scheibenwischeranlage bzw. des Scheibenwischersystems, welches den Befestigungsabschnitt (5) aufweist, als Gußteil, insbesondere Druckgußteil, aus einem geeigneten Metall bzw. einer geeigneten Metallegierung oder als Spritzgußteil aus einem geeigneten Kunststoff hergestellt ist.

## Claims

1. Windshield wiper system with a noise-damping or vibration-damping attachment feature for attachment to a vehicle chassis, wherein a damping element (11) is arranged in a passage opening (18) of an attachment section (5) of the windshield wiper system such that, the edge (22) of the opening (18) catches an opening arranged in the outer surface of the damping element (11) and that parts of the damping element (11) are arranged on both sides of the attachment section (5), and that a bushing (19) to hold an attachment bolt or an attachment screw (12) is located in a generally central passage opening of the damping element (11), characterized by the combination of the following properties:
a) the attachment section (5) and the bushing (19) are manufactured as a single part from the same material;
b) the bushing (19) is held by means of one or several ridges (2) at a distance from the edge (22) of the opening (10) of the attachment section (5) and is at least temporarily connected via the ridge(s) (20) to the attachment section (5);
c) the ridge(s) (20) are such thin and shaped so that the solid-borne sound or vibrations, are transmitted to a negligible extent or not at all;
d) the damping element (11) is cast or injected into the space between attachment section (5) and bushing (19).

2. Windshield wiper system according to Claim 1, characterized in that several ridges (20) extend like spokes or vanes between the bushing (19) and the attachment section (5).

3. Windshield wiper system according to one of the preceding claims, characterized in that the length of the ridges (20) in the region between the bushing (19) and the edge (22) of the passage opening (18) of the attachment section (5) is larger than the distance between the bushing (19) and the edge (22) of the passage opening (18) which is to be bridged.

4. Windshield wiper system according to Claim 3, characterized in that the ridges (20) are formed in an arc, S or W or V-shape or the like.

5. Windshield wiper system according to one of the preceding claims, characterized in that the ridges (20) are of lamellar design and with regard to their width, are arranged at an angle v of 0° to 180° to the plane passing through the edge (22) of the opening (18) of the attachment section (5).

6. Windshield wiper system according to one of the preceding claims, characterized in that the ridges (20) run at least approximately tangential into the outer mantle surface of the bushing (19).

7. Windshield wiper system according to one of the preceding claims, characterized in that the ridges (20) extend past the edge (22) of the opening (18) at one or at both outer surfaces of the attachment section (5).

8. Windshield wiper system according to Claim 1, characterized in that a single ridge (20) in the form of continuous lamina bridges the annular gap between bushing (19) and edge (22) of the opening (18) in the attachment section (5) and that on both sides of the attachment section (5) the parts of the damping elements (5) are cast or injection molded in the space between the attachment section (5) and the bushing (19) and the one ridge (20), respectively.

9. Windshield wiper system according to Claim 8, characterized in that the lamina is of corrugated or pleated form in the direction of the width of the annular gap between bushing (19) and edge (22) of the opening (18).

10. Windshield wiper system according to one of the preceding claims, characterized in that the ridges (20) have a set fracture point at which they will fracture under mechanical load, e.g., during the attachment of the windshield wiper system or of the windshield wiper assembly to the vehicle chassis.

11. Windshield wiper system according to one of the preceding claims, characterized in that the component of the windshield wiper system or the windshield wiper assembly which has the attachment section (5) is manufactured as a cast article, in particular a pressure cast article, from a suitable metal or a suitable metal alloy or as an injection molded article from a suitable plastic.

## Revendications

1. Système d'essuie-glaces pourvu d'un dispositif de fixation amortisseur des bruits et des vibrations, destiné à être fixé sur une carrosserie d'un véhicule, où un élément amortisseur (11) est disposé dans un évidement (18) d'une section de fixation (5) du système d'essuie-glaces, d'une manière telle que le bord (22) de l'évidement (18) s'engage dans un évidement ménagé dans la périphérie extérieure de l'élément amortisseur (11), et que des parties de l'élément amortisseur (11) se situent des deux côtés de la section de fixation (5), et où une douille (19) destinée à recevoir un axe de fixation ou une vis de fixation (12) est disposée dans une ouverture débouchante généralement centrée de l'élément amortisseur (11), caractérisé par la combinaison des caractéristiques suivantes :
a.) la section de fixation (5) et la douille (19) sont fabriquées d'un seul tenant en une seule pièce, à partir de la même matière,
b.) la douille (19) est maintenue à une certaine distance du bord (22) de l'évidement (18) de la section de fixation (5) au moyen d'une ou de plusieurs branches (20), et est au moins temporairement reliée à la section de fixation (5) via cette ou ces branche(s) (20),
c.) la ou les branche(s) (20) est/sont d'une minceur telle, et d'une forme telle, qu'elle(s) ne transmette(nt) pas, ou dans une mesure négligeable seulement, des bruits de structure ou des vibrations,
d.) l'élément amortisseur (11) est intégré par moulage ou par injection dans l'espace compris entre la section de fixation (5) et la douille (19) et ladite une branche (20) ou lesdites plusieurs branches (20).

2. Système d'essuie-glaces selon la revendication 1, caractérisé en ce que plusieurs branches (20) s'étendent à la manière de rayons ou d'ailettes entre la douille (19) et la section de fixation (5).

3. Système d'essuie-glaces selon l'une des revendications précédentes, caractérisé en ce que, dans la zone comprise entre la douille (19) et le bord (22) de l'évidement (18) de la section de fixation (5), la longueur des branches (20) est plus grande que la distance à couvrir entre la douille (19) et le bord (22) de l'évidement (18).

4. Système d'essuie-glaces selon la revendication 3, caractérisé en ce que les branches (20) suivent une forme en arc ou en S ou en Ω ou en V ou similaire.

5. Système d'essuie-glaces selon l'une des revendications précédentes, caractérisé en ce que les branches (20) sont configurées en forme de lamelles et sont disposées, par rapport à leur largeur, à un angle de 0° à 180° par rapport au plan passant par le bord (22) de l'évidement (18) de la section de fixation (5).

6. Système d'essuie-glaces selon l'une des revendications précédentes, caractérisé en ce que les branches (20) arrivent au moins à peu près tangentiellement sur la surface enveloppante extérieure de la douille (19).

7. Système d'essuie-glaces selon l'une des revendications précédentes, caractérisé en ce que les branches (20) couvrent le bord (22) de l'évidement (18) sur l'une des deux surfaces extérieures, ou les deux, de la section de fixation (5).

8. Système d'essuie-glaces selon la revendication 1, caractérisé en ce qu'une seule branche (20) faite sous forme d'une lamelle fermée enjambe l'intervalle annulaire entre la douille (19) et le bord (22) de l'évidement (18) dans la section de fixation (5), et en ce qu'une partie de l'élément amortisseur (11) est respectivement intégrée par moulage ou par injection, des deux côtés de la section de fixation (5), dans l'espace compris entre la section de fixation (5) et la douille (19) et ladite une branche (20).

9. Système d'essuie-glaces selon la revendication 8, caractérisé en ce que la lamelle est configurée selon une forme ondulée ou plissée dans le sens de la largeur de l'intervalle annulaire compris entre la douille (19) et le bord (22) de l'évidement (18).

10. Système d'essuie-glaces selon l'une des revendications précédentes, caractérisé en ce que les branches (20) comportent un point d'amorce de rupture, où elles casseront sous l'effet d'une sollicitation mécanique, par exemple lors du montage de l'ensemble d'essuie-glaces ou du système d'essuie-glaces sur la carrosserie du véhicule.

11. Système d'essuie-glaces selon l'une des revendications précédentes, caractérisé en ce que le composant de l'ensemble d'essuie-glace ou du système d'essuie-glace, qui comporte la section de fixation (5), est fabriqué sous forme d'une pièce moulée, en particulier sous forme d'une pièce moulée sous pression, à partir d'un métal approprié ou d'un alliage métallique approprié, ou sous forme d'une pièce moulée par injection, à partir d'une matière plastique appropriée.
